# EUROPÄISCHE PATENTSCHRIFT

(11) **EP 1 301 300 B1**
(45) Veröffentlichungstag und Bekanntmachung des Hinweises auf die Patenterteilung: **25.10.2006**
(21) Anmeldenummer: 01953862.8
(22) Anmeldetag: 30.06.2001
(51) Int. Cl.: B22D 17/00, B29C 47/10

(54) **VORRICHTUNG ZUM SCHMELZEN UND FÖRDERN VON MATERIAL**
DEVICE FOR MELTING AND CONVEYING MATERIAL
DISPOSITIF POUR FAIRE FONDRE ET TRANSPORTER UN MATERIAU

(30) Priorität: 07.07.2000 DE 10033165
(43) Veröffentlichungstag der Anmeldung: 16.04.2003
(73) Patentinhaber: Hengst GmbH & Co. KG, 48147 Münster (DE)
(72) Erfinder: BOEHNKE, Christian, 48159 Münster (DE)
(74) Vertreter: Habbel, Ludwig
(86) Internationale Anmeldenummer: PCT/DE2001/002485
(87) Internationale Veröffentlichungsnummer: WO 2002/004146

(56) Entgegenhaltungen:
- WO-A-99/50007
- CH-A- 399 730

## Beschreibung

Die Erfindung betrifft eine Vorrichtung nach dem Oberbegriff des Anspruchs 1.

Eine gattungsgemäße Vorrichtung ist aus der CH-A-399 730 bekannt. Ähnliche Vorrichtungen sind aus der DE 36 40 370 C2, der EP 778 099 A3, der EP 904 875 A1, oder aus der WO 99/50007 bekannt.

Beispielsweise im Bereich automatisierter Spritzgußanlagen ist es bekannt, Kunststoff in Schneckenfördereinrichtungen sowohl zu fördern als auch zu schmelzen. Die innere Reibung des Kunststoffes bewirkt, daß durch die Förderschnecke ein hoher Anteil der zum Schmelzen aufzuwendenden Energie in das Material eingetragen wird. Zusätzlich ist eine Beheizung, üblicherweise außerhalb des Förderkanals, vorgesehen.

Bei Metallen trägt der Anteil an innerer Reibung erheblich weniger zur Aufheizung bei als bei Kunststoff. Förderschnecken dienen hier überwiegend dem Zweck, das Material lediglich zu fördern. Die zum Schmelzen des Materials aufzubringende Leistung in derartige Vorrichtungen einzutragen kann problematisch sein, wenn diese Fördereinrichtungen mit Abmessungen bzw. Bauformen verwendet werden, wie sie beispielsweise aus dem Bereich der Kunststoffverarbeitung bekannt sind.

In diesem Fall nämlich ist der Eintrag von "äußerer" Heizleistung - im Gegensatz zu der "inneren" Aufheizleistung durch innere Reibung - lediglich von der Außenseite des Förderkanales her möglich. Der durch die Schnecke aufzubringende Energieanteil zum Aufschmelzen des Materials reicht bei der Verarbeitung von Metallen jedoch nicht aus, um ein rasches und insbesondere zuverlässig gleichmäßiges Aufschmelzen der Metalle zu ermöglichen. Es kann bei derartigen Anlagen und Verfahren vorkommen, daß die Metalle im Inneren des Förderkanales unerwünscht kalt sind und dementsprechend noch unerwünscht fest sind, während sie im äußeren Bereich des Förderkanales, wo die von außen einwirkende Heizung zum Tragen kommt, bereits in unerwünscht starkem Maße aufgeschmolzen bzw. aufgeheizt sind, so daß sich insgesamt ein unerwünscht inhomogenes Phasengemisch des Metalls ergibt.

Wenn, wie bei der gattungsgemäßen Vorrichtung, ein Schieber an Stelle einer rotierenden Schnecke verwendet wird, entfallen weitgehend die Einflüsse der inneren Materialreibung, wie sie durch die Knet- oder Rührwirkungen einer Schnecke erzielt werden. Der Wärmeeintrag in das aufzuschmelzende Material wird daher kaum durch die Fördereinrichtung, sondern nahezu ausschließlich durch Heizeinrichtungen bewirkt, so daß sich auf einfache Weise und äußerst präzise der Schmelzvorgang durch diese Heizeinrichtungen steuern läßt, und zwar unabhängig von der Förderfunktion, die durch den Schieber übernommen wird. Heiz- und Förderleistung können somit weitgehend unabhängig voneinander beeinflußt werden.

Der Erfindung liegt die Aufgabe zugrunde, eine Vorrichtung zum Schmelzen und Fördern von Material anzugeben, mit welcher sowohl Kunststoffe als auch Metalle problemlos verarbeitet werden können und ein gleichmäßiges, möglichst homogenes Phasengemisch an festen und / oder flüssigen Anteilen des Materials erzielbar ist.

Diese Aufgabe wird durch eine Vorrichtung mit den Merkmalen des Anspruchs 1 gelöst.

Die Erfindung schlägt mit anderen Worten vor, den Schieber in einem zwischen einem Innenrohr und einem Außenrohr gebildeten Förderkanal anzuordnen. Der Förderkanal ist rohrförmig und doppelwandig ausgestaltet, so daß sich zwischen Außen- und Innenrohr ein ringförmiger Freiraum als Querschnitt des eigentlichen Kanals ergibt, durch welchen das Material gefördert wird, wobei die Ringform kreisrund, oval oder mehreckig sein kann. Auf diese Weise kann eine Beheizung von innen und von außen erfolgen, beispielsweise durch Kontakt- oder Strahlungsheizungen.

Insbesondere wenn das als "Innenrohr" bezeichnete Bauteil des Förderkanales nicht tatsächlich als Rohr, sondern als massiver stangen- bzw. zylindrischer Körper ausgebildet ist, kann vorgesehen sein, innerhalb dieses Körpers beispielsweise Heizpatronen vorzusehen, so daß dieses "Innenrohr" eine gleichmäßige Beheizung des Förderkanales von innen ermöglicht. Diese Bauform ist z. B. für Anlagen kleinerer Abmessungen geeignet, bei denen die Anordnung z. B. von Strahlungsheizkörpern im Inneren des Innenrohrs schwierig wäre.

Bei der rohrförmigen Ausgestaltung des Förderkanales, bei der der Freiraum für das Material einen Ringquerschnitt aufweist, ist erfindungsgemäß eine Schiebehülse als Schieber vorgesehen. So kann der Hülsenquerschnitt dem Ringquerschnitt des Förderkanals angepasst sein, so dass über den gesamten Querschnitt des Freiraumes des Förderkanales die Materialförderung erfolgen kann und möglichst gleichmäßige Strömungsverhältnisse erzielbar sind.

Die Schiebehülse ist erfindungsgemäß zweiteilig ausgestaltet: sie weist erstens eine Schließhülse auf, mit welcher eine Verbindung zwischen der Einlassöffnung und dem Förderkanal unterbrochen werden kann, entweder unmittelbar an der Einlassöffnung, oder weiter innerhalb des Förderkanals. Zweitens weist die Schiebehülse eine Förderhülse auf, die durch ihre Bewegung das Material innerhalb des Förderkanals fördert. Diese beiden Bauteile der Schiebehülse können unabhängig voneinander bewegt werden, um Fördervorgänge und Druckverhältnisse innerhalb des Förderkanals nach Wahl beeinflussen zu können.

Alternativ hierzu können innerhalb des ringförmigen Freiraumes des Förderkanales mehrere längliche, etwa stabförmige Schieber vorgesehen sein, so daß entlang dem Umfang des Förderkanales individuell die einzelnen Förderverhältnisse beeinflußbar sind, indem diese einzelnen, etwa stabförmigen Schieber unabhänging voneinander angesteuert werden können.

Der Förderkanal kann vorteilhaft stufenförmig Durchmesserveränderungen aufweisen. In diesem Fall kann das Innenrohr gegenüber dem Außenrohr axial beweglich sein, so daß, wenn die beiden Rohre auseinandergezogen sind, sich ein durchgehender Freiraum von der Einlassöffnung bis zur Auslassöffnung ergibt, so daß bei Bewegung des Schiebers das Material durch den Förderkanal gefördert werden kann. Werden demgegenüber die Innen- und Außenrohre zueinander geschoben, so können sie in dem Bereich, wo die einzelnen Stufen ausgeprägt sind, Engstellen ausbilden oder tatsächlich aneinander anliegen.

Auf diese Weise werden einzelne Kammern in den jeweiligen Durchmesserstufen gebildet werden, zwischen denen eine Materialförderung behindert wird oder nahezu ausgeschlossen ist. Im Zusammenhang mit den Bewegungen der Schiebehülse kann so die Förderung des Materials besonders vorteilhaft beeinflußt werden und es können durch die Nähe von Innen- und Außenrohr bewußt Scherbewegungen im Material bewirkt werden, so daß beispielsweise bei zu verarbeitenden Metallen Dendriten der noch festen Metallbestandteile bewußt gebrochen werden können. Auch kann hierdurch der Druck innerhalb des aufzuschmelzenden Materials beeinflusst werden, indem bei zusammengeschobenen Innen- und Außenrohren, also bei behinderten Materialstrom im Förderkanal, die Schiebehülse betätigt wird.

Vorteilhaft kann die Auslassöffnung in einem der beiden Rohre des rohrförmigen, doppelwandigen Förderkanales ausgebildet sein, beispielsweise im Außenrohr. Das jeweils andere Rohr, also beispielsweise das Innenrohr, kann einen Verschlußstopfen für diese Auslassöffnung schaffen. Durch die bereits erwähnte Rohrbeweglichkeit kann der Innenraum des Förderkanales gegegenüber den äußeren Verhältnissen auf einfache Weise abgeschlossen werden.

Wenn die Vorrichtung beispielsweise an eine Gieß- bzw. Einspritzmaschine angeschlossen ist, die mit vergleichsweise hohen Drücken arbeitet, kann auf einfache Weise durch die Schließstellung der beiden Rohre des Förderkanales zueinander eine Druckabdichtung der Fördereinrichtung gegenüber der eigentlichen Einspritzeinrichtung vorgesehen sein. Weder das Material in der Schmelz- und Fördereinrichtung noch die Bauteile dieser Vorrichtung müssen dann den unerwünscht großen Druckspitzen der Einspritzeinrichtung ausgesetzt werden. Eine Trennung von Förderung einerseits und den Preß- bzw. Einschußkräften andererseits, die beispielsweise im Einspritzkanal einer nachgeschalteten Materialverarbeitungsanlage herrschen, ist daher problemlos möglich.

Bei einer rohrförmigen Ausgestaltung des Förderkanals kann vorteilhaft eine kreisrunde Querschnittsgeometrie vorgesehen sein. Dies erleichtert einerseits die Herstellung zugunsten besonders preisgünstiger Bauteile der Vorrichtung. Weiterhin wird auf diese Weise eine gleichmäßige Kräfteverteilung der auf die einzelnen Bauteile einwirkenden Kräfte ermöglicht, so daß die Haltbarkeit und Zuverlässigkeit der Vorrichtung positiv beeinflußt wird. Zudem ist eine gleichmäßige Beheizung möglich unter Vermeidung von Zonen mit besonders hohem oder besonders niedrigem Temperaturniveau. Schließlich sind durch diese kreisförmige Querschnittsgeometrie Drehbewegungen zwischen den einzelnen Bauteilen möglich, so daß beispielsweise ein Dichtsitz an verschiedenen Dichtstellen dieser Bauteile stets garantiert bzw. wieder hergestellt werden kann und erkaltete Rückstände des Materials, die einen derartigen Dichtsitz beeinträchtigen könnten, mittels derartiger Drehbewegungen entfernt werden können.

Gegebenenfalls können die Oberflächen des doppelwandigen Förderkanales beschichtet oder mit Rippen od. dgl. versehen sein, um einen größeren Energieeintrag in den Förderkanal und damit eine besonders intensive Beheizung zu ermöglichen.

Die Erfindung wird anhand einer rein schematischen Zeichnung im folgenden näher erläutert. Dabei zeigt
- Fig. 1: eine Vorrichtung zum Schmelzen und Fördern von Material, mit geöffneter Einlassöffnung und geschlossener Auslassöffnung, und
- Fig. 2: die Vorrichtung von Fig. 1 mit geschlossener Einlassöffnung und geöffneter Auslassöffnung.

Dabei ist in der Zeichnung mit 1 allgemein eine rein schematisch und im Querschnitt dargestellte Vorrichtung bezeichnet, die zum Fördern und Schmelzen von Material dient. Die Vorrichtung 1 weist ein Außenrohr 2 auf sowie ein Innenrohr 3, wobei diese beiden Außen- und Innenrohre 2 und 3 in Förderrichtung zunächst zylindrisch und koaxial verlaufen und dann stufenweise ihren jeweiligen Durchmesser verringern. Mit ihrem unten dargestellten Ende schließt die Vorrichtung 1 an einen Einspritzkanal 4 an, der beispielsweise einer automatisierten Gießmaschine das aufgeschmolzene Material zuführt und von dem nur ein Abschnitt dargestellt ist. In dem Einspritzkanal 4 kann ein Einspritzkolben vorgesehen sein, der aufgrund der rein schematischen Darstellungsweise der Zeichnung nicht ersichtlich ist.

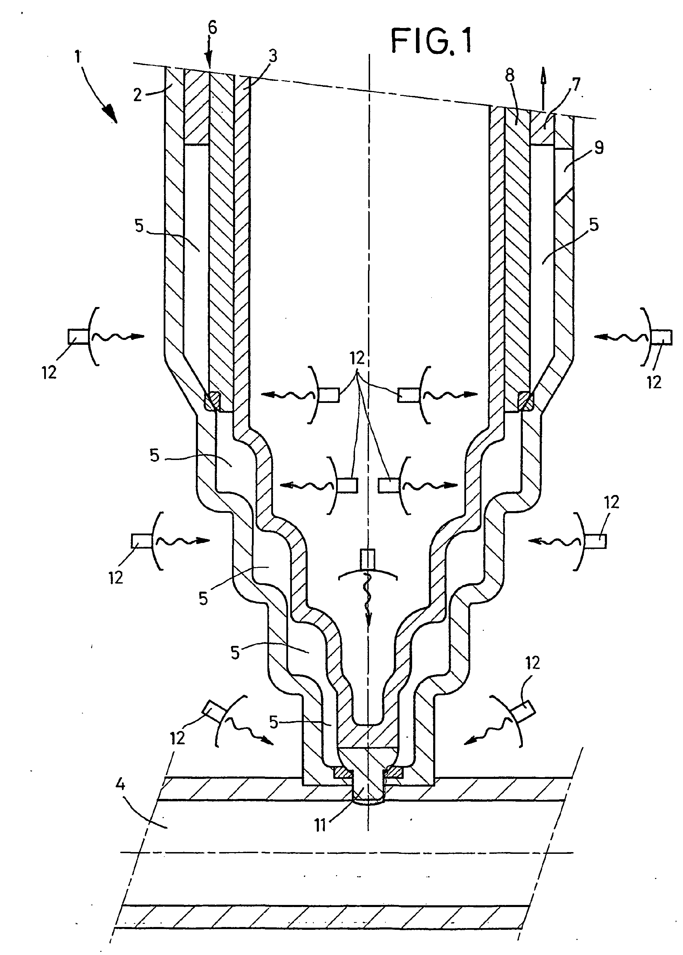

Zwischen dem Außenrohr 2 und dem Innenrohr 3 ergibt sich ein Freiraum, der einen ringförmigen Förderkanal 5 für das Material darstellt. In dem Abschnitt des Förderkanals 5, in dem die Innen- und Außenrohre 2 und 3 zylindrisch ausgestaltet sind, ist ein Schieber 6 vorgesehen, der als zweiteilige Schiebehülse ausgestaltet ist, wobei eine radial äußere Förderhülse 7 vorgesehen ist und eine radial innere Schließhülse 8, welche in Fig. 1 den Förderkanal 5 verschließt. Durch die axiale Beweglichkeit der Förderhülse 7 kann eine Einlaßöffnung 9 im Außenrohr 2 wahlweise geöffnet oder verschlossen werden. Fig. 1 zeigt die Freigabestellung der Förderhülse 7, in welcher die Einlaßöffnung 9 zum Förderkanal 5 hin geöffnet ist.

Weiterhin ist in Fig. 1 dargestellt, daß sich die Außen- und Innenrohre 2 und 3 in einer zusammengeschobenen Anordnung befinden, so daß in dem Bereich der stufenförmigen Querschnittsverminderungen die Außen- und Innenrohre 2 und 3 an diesen Stellen jeweils eine Engstelle des Förderkanals 5 bilden, an der ein freier Materialfluß erschwert ist.

In der in Fig. 1 dargestellten Anordnung befindet sich die radial innere Schließhülse 8 in ihrer Schließstellung, in der sie dem Außenrohr 2 abdichtend anliegt, und gleichzeitig befindet sich die radial äußere Förderhülse 7 in ihrer angehobenen Position, so daß die Einlaßöffnung 9 freigegeben wird. Material kann in den Förderkanal 5, zumindest in dessen oberen Abstand, gelangen.

Anschließend an diesen in Fig. 1 dargestellten Betriebszustand kann die Förderhülse 7 abgesenkt werden, so daß zunächst die Einlaßöffnung 9 verschlossen wird und anschließend das Material, welches sich im oberen Abschnitt des Förderkanales 5 befindet, verdichtet werden kann. Dieses Material kann beispielsweise zunächst granulatförmig vorliegen.

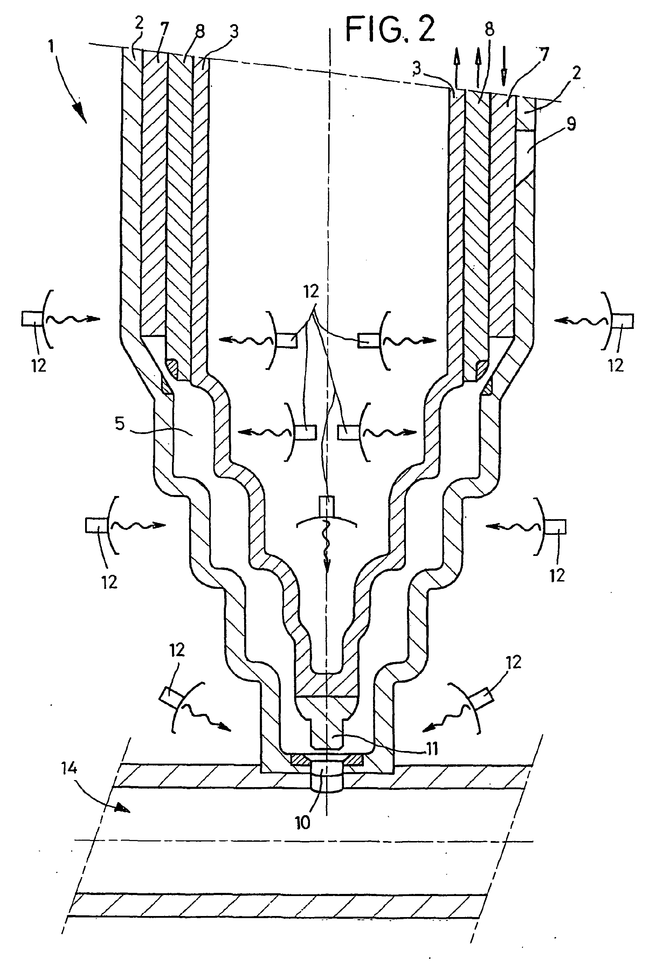

Im weiteren Verlauf wird die Schließhülse 8 angehoben, wie aus Fig. 2 ersichtlich, so daß sie vom Außenrohr 2 beabstandet ist und das Material vom oberen Abschnitt des Förderkanales 5 in die stufenförmig durchmesserreduzierten Abschnitte des Förderkanales 5 gelangen kann. Hierzu wird die Förderhülse 7 abwärts bewegt bis in ihre aus Fig. 2 ersichtliche untere Endstellung.

Dabei werden auch die Außen- und Innenrohre 2 und 3 relativ zueinander bewegt, indem das Innenrohr 3 angehoben wird. Die an den Kanten der Stufen gebildeten Engstellen des Förderkanales 5, die aus Fig. 1 ersichtlich waren, werden hierdurch erweitert, so daß eine problemlose Materialförderung zu den immer kleineren Durchmessern des Förderkanales 5 ermöglicht wird.

Sämtliche Axialbewegungen des Innenrohres 3 der Förderhülse 7 und der Schließhülse 8 können entweder als rein translatorische Bewegungen ausgeführt werden oder als kombinierte translatorische und rotatorische Bewegungen, um beispielsweise die einzelnen Bauteile jeweils zuverlässig von anhaftenden Materialresten zu befreien und so beispielsweise einen zuverlässigen Dichtsitz der einzelnen Bauteile aneinander zu gewährleisten.

Bei der in Fig. 2 dargestellten angehobenen Stellung des Innenrohres 3 wird eine Auslaßöffnung 10 freigegeben, die im Außenrohr 2 gebildet ist und die durch einen Stopfen 11 verschließbar ist, wie aus Fig. 1 ersichtlich, wobei dieser Stopfen 11 am unteren Ende des Innenrohres 3 vorgesehen ist.

Dadurch, daß die Auslaßöffnung 10 mittels des Stopfens 11 verschließbar ist, können im Einspritzkanal 4 erhebliche Drücke aufgebaut werden, ohne daß sich diese Druckspitzen bis in den Förderkanal 5 fortpflanzen. Hierdurch wird einerseits die Schmelz- und Fördervorrichtung 1 geschont, andererseits wird der Druckverlauf in der eigentlichen Einspritzeinrichtung nicht beeinflußt, so daß sich dieser Druckverlauf besser steuern läßt als wenn eine Verbindung von der Einspritzeinrichtung in die Schmelz- und Fördervorrichtung 1 bestehen würde.

Heizeinrichtungen 12 sind in Form von Strahlungsheizungen sowohl radial außerhalb des Außenrohres 2 als auch radial innerhalb des Innenrohres 3 angeordnet, so daß der Förder-kanal 5 beidseitig und somit möglichst intensiv beheizbar ist. Die Heizeinrichtungen 12 sind lediglich rein schematisch angedeutet. Anstelle der Strahlungsheizungen können auch andere Heizvorrichtungen vorgesehen sein, beispielsweise Heizwendeln od. dgl., die als Kontaktheizungen innen und außen auf den Innen- und Außenrohren 2 und 3 angeordnet sind.

Spezielle Dichtungswerkstoffe können im Bereich der Auslassöffnung 10, zum Abdichten gegenüber dem Stopfen 11, und in dem unteren Bereich der Schließhülse 8 sowie in dem benachbarten Bereich der Außenhülse 2 vorgesehen sein, um einen zuverlässigen Dichtsitz an diesen Abdichtungsstellen zu gewährleisten. Diese speziellen Dichtstoffe sind ebenfalls rein schematisch in den Zeichnungen angedeutet.

Dort, wo die Stufen der Innen- und Außenrohre 2 und 3 nahezu aneinander anliegen, sind keine speziellen Dichtmaterialien vorgesehen. Hier wird lediglich eine Verringerung des freien Quer-schnittes des Förderkanales 5 bewirkt, so daß, wenn die beiden Innen- und Außenrohre 2 und 3 in ihrer zusammen-gefahrenen Stellung (Fig. 1) angeordnet sind, keine tatsächliche Abdichtung zwischen den einzelnen, in den jeweiligen Stufen ausgebildeten Kammern des Förderkanales 5 bewirkt wird. Vielmehr wird lediglich durch die Verringerungen des Quer-schnittes des Förderkanales bewirkt, daß teilweise aufge-schmolzenes Material, welches beispielsweise dendritisch vorliegt, abgeschert werden kann, so daß die Dendriten ge-brochen werden.

Je nach einzusetzendem Material, insbesondere wenn eine derartige Dendritenproblematik nicht vorliegt, kann vorgesehen sein, auf die Ausbildung der dargestellten stufenweisen Durchmesserverringerungen des Förderkanales 5 zu verzichten und den Förderkanal entweder zylindrisch mit unverändertem Durchmesser bis zur Auslaßöffnung 10 weiter zu führen oder den Durchmesser des Förderkanales 5 kontinuierlich zu verringern, beispielsweise durch einen V-förmigen Verlauf des Förderkanales 5.

Die Querschnittverringerung des Förderkanals, ob kontinuierlich oder stufig, ermöglicht bei vergleichsweise geringer Bewegung des Schiebers hohe Fördergeschwindigkeiten oder hohe Förderdrücke nahe der Auslassöffnung, so dass das Material in einem schnellen, kurzzeitigen Einspritzvorgang in den Einspritzkanal 4 gelangen kann. Demgegenüber ist die Materialgeschwindigkeit in dem Abschnitt des Förderkanals 5 mit einem größeren Durchmesser langsamer, so dass ein längerer Zeitraum zum Aufschmelzen des Materials zur Verfügung steht.

## Patentansprüche

1. Vorrichtung (1) zum Schmelzen und Fördern von Material,
wie Kunststoff oder Metall,
mit einem Förderkanal (5),
welcher eine Einlassöffnung (9) für das Material enthält, sowie eine Auslassöffnung (10) für das zumindest teilweise aufgeschmolzene Material,
und mit Heizeinrichtungen (12), die zwischen Einlass- und Auslassöffnung (9, 10) den Förderkanal (5) und / oder das Material beheizen,
und mit einem zweiteiligen Schieber (6), welcher das Material von der Einlassöffnung (9) zur Auslassöffnung (10) fördernd hin und her beweglich ist, **dadurch gekennzeichnet, dass**
der Förderkanal (5) rohrförmig und doppelwandig ausgebildet ist, zwischen einem Innenrohr (3) und einem Außenrohr (2),
und
dass der Schieber (6) als zweiteilige Schiebehülse welche zwischen dem Innenrohr (3) und dem Außenrohr (2) angeordnet ist, ausgestaltet ist, mit einer radial inneren Schließhülse (8) zur Freigabe bzw. zum Schließen des Förderkanals (5), sowie mit einer unabhängig von der Schließhülse (8) beweglichen radial äußeren Förderhülse (7).

2. Vorrichtung nach Anspruch 1 oder 2, **dadurch gekennzeichnet, dass** sich der Förderkanal (5) von einem ersten Durchmesser im Bereich der Einlassöffnung (9) stufenweise zu einem geringeren Durchmesser im Bereich der Auslassöffnung (10) verringert,
wobei die beiden Rohre (2, 3) des Förderkanals (5) axial zueinander beweglich sind,
zwischen einer Förderstellung, in welcher ein Durchlaß zwischen den einzelnen Stufen des Innen- und Außenrohres (2, 3) geschaffen ist,
und einer Schließstellung, in welcher die Stufen des Innen- und des Außenrohres (2, 3) nahe benachbart sind, derart, dass ein Materialstrom zwischen den Stufen behindert ist.

3. Vorrichtung nach Anspruch 1, **dadurch gekennzeichnet, dass** eines der Rohre (2, 3) einen Stopfen (11) für die von dem anderen Rohr (2, 3) gebildete Auslassöffnung (10) bildet,
wobei die Rohre (2, 3) zueinander beweglich sind zwischen einer Freigabestellung und einer Schließstellung zur wahlweisen Freigabe oder Schließung der Auslassöffnung (10).

4. Vorrichtung nach Anspruch 1, **dadurch gekennzeichnet, dass** das Innenrohr als massives, stangen- bzw. zylinderförmiges Bauteil ausgebildet ist.

5. Vorrichtung nach Anspruch 1, **dadurch gekennzeichnet, dass** die Heizeinrichtungen (12) radial innerhalb und außerhalb von dem Förderkanal (5) angeordnet sind.

## Claims

1. Device (1) for melting and conveying material such as plastic or metal, with a conveying duct (5) containing an entry opening (9) for the metal, and an outlet opening (10) for the wholly or partially molten material, and with heating devices (12) for heating the conveying duct (5) and/or the material between the inlet and outlet opening (9, 10), and with a two-part slide (6) which moves back and forward conveying the material from the inlet (9) to the outlet (10) opening, **characterised in that** the conveying duct (5) is tubular in shape and double-walled, and that the slide (6) is formed as a two-part sliding sleeve located between the inner tube (3) and the outer tube (2), with an inner radial closing sleeve (8) for opening and closing the conveying duct (5) and with an outer radial conveying sleeve (7) which moves independently of the closing sleeve (8).

2. Device according to claim 1 or 2, **characterised in that** the conveying duct (5) narrows in stages from its initial diameter in the area of the inlet opening (9) to a smaller diameter in the area of the outlet opening (10), and the two tubes (2, 3) of the conveying duct (5) can be moved axially in relation to one another between a conveying position in which a passage is created between the individual stages of the inner and outer tube (2, 3), and a closed position in which the stages of the inner and outer tube (2, 3) are so close to one another that the flow of material between the stages is obstructed.

3. Device according to claim 1, **characterised in that** one of the tubes (2, 3) forms a plug (11) for the outlet opening (10) formed by the other tube (2, 3), and the tubes (2, 3) can be moved in relation to one another between an open position and a closed position for opening or closing the outlet opening (10) as required.

4. Device according to claim 1, **characterised in that** the inner tube is a solid rod- or cylinder-shaped component.

5. Device according to claim 1, **characterised in that** the heating devices (12) are arranged radially inside and outside the conveying duct (5).

## Revendications

1. Dispositif (1) servant à fondre et refouler de la matière telle que de la matière plastique ou du métal,
avec un conduit de refoulement (5),
contenant un orifice (9) servant à l'admission de la matière,
ainsi qu'un orifice (10) servant à la sortie de la matière au moins partiellement fondue,
et avec des dispositifs de chauffage (12) qui, entre les orifices d'admission et de sortie (9, 10), chauffent le conduit de refoulement (5) et / ou la matière,
et avec un curseur (6) en deux parties se déplaçant en va-et-vient de l'orifice d'admission (9) vers l'orifice d'échappement (10) et refoulant ainsi de la matière,
**caractérisé en ce que**
le conduit de refoulement (5) est configuré de forme tubulaire et à double paroi, entre un tube intérieur (3) et un tube extérieur (2),
le curseur (6) est configuré en tant que douille de poussée en deux parties agencée entre le tube intérieur (3) et le tube extérieur (2), avec une douille intérieure radiale (8) de poussée servant à ouvrir et à obturer le conduit de refoulement (5), ainsi qu'avec une douille de refoulement (7) radiale extérieure mobile indépendante de la douille de fermeture (8).

2. Dispositif selon la revendication 1 ou 2, **caractérisé en ce que** le diamètre du conduit de refoulement (5) diminue, passant progressivement d'un premier diamètre dans la zone de l'orifice d'admission (9) à un deuxième diamètre, moindre, dans la zone de l'orifice de sortie (10), les deux tubes (2, 3) du conduit de refoulement (5) étant réciproquement mobiles axialement,
entre une position de refoulement dans laquelle un orifice de passage a été ménagé entre les différents gradins des tubes intérieur et extérieur (2, 3),
et une position d'obturation dans laquelle les gradins du tube intérieur et du tube extérieur (2, 3) se trouvent dans un voisinage rapproché de telle sorte qu'un flux de matières entre les gradins se trouve gêné.

3. Dispositif selon la revendication 1, **caractérisé en ce que** l'un des tubes (2, 3) sert de bouchon (11) à l'orifice de sortie (10) formé par l'autre tube (2, 3),
les tubes (2, 3) étant mobiles l'un par rapport à l'autre, entre une position de passage libre et une position d'obturation, pour permettre au choix d'ouvrir ou de fermer l'orifice de sortie (10).

4. Dispositif selon la revendication 1, **caractérisé en ce que** le tube intérieur est configuré sous forme de composant massif, en forme de tige ou de cylindre.

5. Dispositif selon la revendication 1, **caractérisé en ce que** les dispositifs de chauffage (12) sont disposés radialement à l'intérieur et à l'extérieur du conduit de refoulement (5).
